# EUROPÄISCHE PATENTANMELDUNG

(11) **EP 2 664 637 A1**
(43) Veröffentlichungstag der Anmeldung: **20.11.2013**
(21) Anmeldenummer: 12168058.1
(22) Anmeldetag: 15.05.2012
(51) Int. Cl.: C08G 18/10, C08G 18/28, C08G 18/32, C08G 18/42, C08G 18/76, C09J 175/06

(54) **Reaktive Polyurethan-Heissschmelzklebstoffe mit niedrigem Isocyanat-Monomergehalt**

(71) Anmelder: Sika Technology AG, 6340 Baar (CH)
(72) Erfinder: Linnenbrink, Martin, 21641 Apensen (DE); Janke, Doreen, 25486 Alveslohe (DE)
(74) Vertreter: Sika Patent Attorneys

(57) **Zusammenfassung**

Die Erfindung betrifft ein Verfahren zur Herstellung einer feuchtigkeitshärtenden Heisschmelzklebstoffzusammensetzung aufweisend die Schritte:
Schritt i) Herstellen eines Umsetzungsprodukts **UP** von mindestens einem Polyol **PO** mit mindestens einem Polyisocyanat **PI**;
Schritt ii) Zugabe von mindestens einem Mercaptosilan
Schritt iii) Zugabe von mindestens einem Aldimin **Z,** welches eine Aldiminogruppe sowie mindestens eine weitere Reaktivgruppe ausgewählt aus der Gruppe bestehend aus Aldiminogruppen, Hydroxylgruppen, Mercaptogruppen und sekundären Aminogruppen aufweist

## Beschreibung

### Technisches Gebiet

Die Erfindung betrifft das Gebiet der feuchtigkeitshärtenden Heissschmelzklebstoffe.

### Stand der Technik

Heissschmelzklebstoffe (Hotmelts) sind Klebstoffe, welche auf thermoplastischen Polymeren basieren. Diese Polymere sind bei Raumtemperatur fest, erweichen beim Erwärmen zu viskosen Flüssigkeiten und können somit als Schmelze appliziert werden. Im Unterschied zu den sogenannten Warmschmelzklebstoffen (Warmmelts), welche eine pastöse Konsistenz haben und bei leicht erhöhten Temperaturen, typischerweise im Bereich von 40 bis 80 °C, appliziert werden, erfolgt die Applikation der Heissschmelzklebstoffe bei Temperaturen ab 85 °C. Beim Abkühlen auf Raumtemperatur verfestigen sie sich unter gleichzeitigem Aufbau der Klebefestigkeit. Klassische Heissschmelzklebstoffe sind nicht-reaktive Klebstoffe. Bei Erwärmung erweichen oder schmelzen sie wieder, wodurch sie sich für einen Einsatz bei erhöhter Temperatur nicht eignen. Zudem neigen klassische Heissschmelzklebstoffe oft auch bei Temperaturen weit unterhalb des Erweichungspunkts zum Kriechen (kalter Fluss).

Diese Nachteile wurden bei den sogenannten reaktiven Heissschmelzklebstoffen durch das Einbringen von reaktiven, zur Vernetzung führenden Gruppen in die Polymerstruktur weitgehend behoben. Insbesondere reaktive Polyurethanzusammensetzungen eignen sich als Heissschmelzklebstoffe. Sie werden kurz auch PUR-RHM genannt. Sie bestehen meist aus Isocyanatgruppen aufweisenden Polyurethanpolymeren, die durch Umsetzung geeigneter Polyole mit einem Überschuss an Diisocyanaten erhalten werden. Sie bauen nach ihrer Applikation durch Abkühlen schnell eine hohe Klebefestigkeit auf und erhalten ihre Endeigenschaften, insbesondere ihre Wärmestandfestigkeit und Beständigkeit gegenüber Umwelteinflüssen, durch die Nachvernetzung des Polyurethanpolymers infolge Reaktion der Isocyanatgruppen mit Feuchtigkeit. Bedingt durch die bei der Herstellung der Isocyanatgruppen aufweisenden Polyurethanpolymere entstehende Molmassenverteilung enthalten solche PUR-RHM jedoch meist bedeutende Mengen an nicht umgesetzten, das heisst nicht mit Polyolen reagierten, Diisocyanaten, welche bei den bei Heissschmelzklebstoffen üblichen Applikationstemperaturen von 85 °C bis 200 °C, typischerweise 120 °C bis 160 °C, teilweise ausgasen und als reizende, sensibilisierende oder toxische Stoffe eine Gesundheitsbelastung für den Verarbeiter darstellen können. Aus diesem Grund wurden verschiedene Anstrengungen unternommen, den Gehalt an nicht umgesetzten Diisocyanaten in reaktiven Polyurethanzusammensetzungen im Allgemeinen und in PUR-RHM im Speziellen zu vermindern.

Ein naheliegender Ansatz ist die physikalische Entfernung des nicht umgesetzten Diisocyanats durch Destillation oder Extraktion. Diese Methoden sind apparativ aufwändig und deshalb teuer; zudem sind sie nicht für alle Diisocyanate gut anwendbar.

### Darstellung der Erfindung

Aufgabe der vorliegenden Erfindung ist es daher, als Heissschmelzklebstoff einsetzbare reaktive, Isocyanatgruppen aufweisende Polyurethanzusammensetzungen (PUR-RHM) zur Verfügung zu stellen, welche in einem einfachen Verfahren ausgehend von Polyolen und technisch verfügbaren monomeren Diisocyanaten erhältlich sind, und welche einen niedrigen Gehalt an nicht umgesetzten Diisocyanaten aufweisen und bei den bei Heissschmelzklebstoffen üblichen Applikationstemperaturen von 85 °C bis 200 °C, typischerweise 120 °C bis 160 °C, über längere Zeit gut verarbeitbar, insbesondere in Bezug auf ihre Viskosität, sind.

Vorzugsweise sind solche Heisschmelzklebstoffzusammensetzungen bei erhöhter Temperatur eine gute Viskositätsstabilität auf, das heisst, dass die Viskosität mit der Lagerzeit bei hoher Temperatur nur sehr langsam ansteigt.

Überraschenderweise wurde gefunden, dass die Aufgabe mit einer Heisschmelzklebstoffzusammensetzungen gemäss dem Herstellungsverfahren nach Anspruch 1 gelöst werden kann.

In einem weiteren Aspekt schliesslich betrifft die Erfindung eine Heisschmelzklebstoffzusammensetzung hergestellt nach dem erfindungsgemässen Verfahren, ein Verfahren zum Verkleben sowie ein nach einem solchen Verfahren verklebter Artikel.

### Wege zur Ausführung der Erfindung

Gegenstand der Erfindung ist ein Verfahren zur Herstellung einer feuchtigkeitshärtenden Heisschmelzklebstoffzusammensetzung aufweisend die Schritte:
Schritt i) Herstellen eines Umsetzungsprodukts **UP** von mindestens einem Polyol **PO** mit mindestens einem Polyisocyanat **PI**;
Schritt ii) Zugabe von mindestens einem Mercaptosilan der Formel (I)

   HS―R³―Si(X)₍₃₋ₐ₎(R²)a (I).

   wobei R² für eine Alkylgruppe mit 1 bis 10 C-Atomen steht,
   R³ für eine lineare oder verzweigte Alkylengruppe mit 1 bis 10 C-Atomen steht,
   X für einen hydrolysierbaren Rest steht,
   a für einen Wert von 0, 1 oder 2 steht;
Schritt iii) Zugabe von mindestens einem Aldimin **Z**, welches eine Aldiminogruppe sowie mindestens eine weitere Reaktivgruppe ausgewählt aus der Gruppe bestehend aus Aldiminogruppen, Hydroxylgruppen, Mercaptogruppen und sekundären Aminogruppen aufweist.

Als Polyole **PO** geeignet sind insbesondere Polyetherpolyole, Polyesterpolyole und Polycarbonatpolyole, sowie Mischungen dieser Polyole.

Als Polyetherpolyole, auch Polyoxyalkylenpolyole genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.

Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter 'Molekulargewicht' oder ,Molgewicht' versteht man im vorliegenden Dokument stets das Molekulargewichtsmittel Mₙ. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim® von Bayer vertrieben.

Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole geeignet sind mindestens zwei Hydroxylgruppen tragende Polyester, welche nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-Caprolacton und einem der vorgenannten zweiwertigen Alkohole als Starter.

Die Polyesterpolyole weisen vorteilhaft ein Molekulargewicht von 1000 bis 15'000 g/mol, insbesondere von 1500 bis 8000 g/mol, insbesondere von 1700 bis 5500 g/mol, auf.

Insbesondere geeignet sind bei Raumtemperatur flüssige, amorphe, teilkristalline und kristalline Polyesterdi- und -triole, insbesondere Polyesterdiole. Geeignete bei Raumtemperatur flüssige Polyesterpolyole sind nicht weit unterhalb von Raumtemperatur fest, beispielsweise bei Temperaturen zwischen 0 °C und 25 °C, und werden vorzugsweise in Kombination mit mindestens einem amorphen, teilkristallinen oder kristallinen Polyesterpolyol eingesetzt. Besonders geeignet sind amorphe Polyesterdiole, sowie Mischungen aus amorphen und bei Raumtemperatur flüssigen Polyesterdiolen.

Als Polycarbonatpolyole geeignet sind jene, wie sie durch Polykondensation beispielsweise der oben genannten - zum Aufbau der Polyesterpolyole eingesetzten - zwei- oder dreiwertigen Alkohole mit Dialkylcarbonaten, wie Dimethylcarbonat, Diarylcarbonaten, wie Diphenylcarbonat, oder Phosgen zugänglich sind.

Besonders geeignet sind Polycarbonatdiole, insbesondere amorphe Polycarbonatdiole.

Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.

Als Polyole bevorzugt sind Polyesterpolyole und Polycarbonatpolyole, insbesondere Polyesterdiole und Polycarbonatdiole.

Besonders bevorzugt sind amorphe Polyesterdiole und amorphe Polycarbonatdiole, sowie Mischungen aus amorphen und bei Raumtemperatur flüssigen Polyester- oder Polycarbonatdiolen.

Am meisten bevorzugt sind Polyesterdiole, insbesondere amorphe Polyesterdiole, sowie Mischungen aus amorphen und bei Raumtemperatur flüssigen Polyesterdiolen.

Als Polyisocyanate **PI** für die Herstellung des Umsetzungsprodukts **UP** können handelsübliche aliphatische, cycloaliphatische oder aromatische Polyisocyanate, insbesondere Diisocyanate, verwendet werden, beispielsweise die folgenden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind MDI, TDI, HDI und IPDI. Besonders bevorzugt sind MDI und IPDI.

Die Herstellung des Umsetzungsprodukts **UP** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Umsetzungsprodukts **UP** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 2.5, insbesondere 1.5 bis 2.2.

Vorzugsweise weist das Umsetzungsprodukts **UP** aus Schritt i) mehr als 90 Gew.-%, insbesondere mehr als 95 Gew.-%, eines Polyurethanpolymers **P** auf, bezogen auf das Gesamtgewicht des Umsetzungsprodukts **UP**, wobei das Polyurethanpolymer **P** über eine Reaktion von mindestens einem Polyisocyanat **PI** und mindestens einem Polyol **PO** hergestellt ist.

Vorzugsweise liegen die Isocyanat-Gruppen gegenüber den Hydroxyl-Gruppen im stöchiometrischen Überschuss vor, insbesondere beträgt das Verhältnis zwischen Isocyanat- und Hydroxyl-Gruppen, kurz "NCO/OH-Verhältnis" genannt, 1.3 bis 2.5, insbesondere 1.5 bis 2.2.

Es ist weiter vorteilhaft, wenn das Polyurethanpolymer **P** bei Raumtemperatur fest ist. Es kann dabei kristallin, teilkristallin oder amorph sein. Für ein teilkristallines oder amorphes Polyurethanpolymer **P** gilt dabei, dass es bei Raumtemperatur nicht oder nur wenig fliessfähig ist, das heisst insbesondere, dass es bei 20 °C eine Viskosität von mehr als 5'000 Pa·s aufweist.

Weiter ist es bevorzugt, wenn das Polyurethanpolymer **P** ein Molekulargewicht von vorzugsweise über 1000 g/mol, insbesondere ein solches zwischen 1200 und 50'000 g/mol, bevorzugt ein solches zwischen 2000 und 30'000 g/mol, aufweist.

Weiterhin weist das Polyurethanpolymer **P** bevorzugt eine mittlere Funktionalität im Bereich von 1.8 bis 2.2 auf.

Vorzugsweise weist das Umsetzungsprodukts **UP** in Schritt i) einen Gehalt an nicht mit einem Polyol **PO** reagiertem Polyisocyanat **PI,** im Folgenden auch nicht umgesetztes Polyisocyanat genannt, von 5 - 0.1 Gew.-%, insbesondere 4- 1 Gew.-%, bezogen auf das Gesamtgewicht des Umsetzungsprodukts **UP**, auf.
Schritt ii) umfasst die Zugabe von mindestens einem Mercaptosilan der Formel (I)

   HS―R³―Si(X)₍₃₋ₐ₎(R²)ₐ (I).

   wobei R² für eine Alkylgruppe mit 1 bis 10 C-Atomen steht,
   R³ für eine lineare oder verzweigte Alkylengruppe mit 1 bis 10 C-Atomen steht,
   X für einen hydrolysierbaren Rest steht,
   a für einen Wert von 0, 1 oder 2 steht.

Die Vorsilbe "Poly" in Substanzbezeichnungen, wie "Polyol" oder "Polyisocyanat" weist im vorliegenden Dokument darauf hin, dass die jeweilige Substanz formal mehr als eine der in ihrer Bezeichnung vorkommenden funktionellen Gruppe pro Molekül enthält.

Der Begriff "Silangruppe" bezeichnet im vorliegenden Dokument eine über ein Siliciumatom an einen organischen Rest gebundene Gruppe, welche hydrolysierbar ist, das heisst eine bis drei hydrolysierbare Reste aufweist. Bei der Hydrolyse der Silangruppe, beispielsweise durch Kontakt mit Luftfeuchtigkeit, bilden sich Silanolgruppen (Si-OH-Gruppen) und, durch nachfolgende Kondensationsreaktionen der Silanolgruppen, Siloxangruppen (Si-O-Si-Gruppen).

Der Begriff "Silan" bezeichnet niedermolekulare organische Verbindungen, welche mindestens eine Silangruppe tragen. Der Begriff "silanfunktionell" bezeichnet Verbindungen, insbesondere Polymere, die Silangruppen aufweisen.

Als "hydrolysierbarer Rest" werden solche Reste an einer Silangruppe verstanden, welche durch Wasser in einer Hydrolysereaktion integral vom Siliciumatom verdrängt und dort formal durch eine Hydroxylgruppe ersetzt werden. Durch die Hydrolysereaktion wird der hydrolysierbare Rest zu einer niedermolekularen Verbindung protoniert, die organisch oder anorganisch sein kann.

Die hydrolysierbaren Reste X im silanfunktionellen Polyurethanprepolymer der Formel (I) sind vor allem diejenigen, die in der Silikonchemie üblich sind, insbesondere diejenigen, welche ausgewählt sind aus der Gruppe bestehend aus der Formel (X-1), (X-2), (X-3), (X-4), (X-5), (X-6), (X-7) und (X-8).

-Cl (X-1) -Br (X-2)

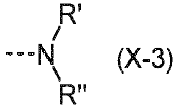

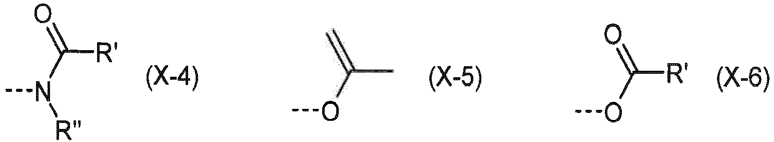

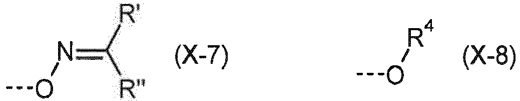

wobei R' und R" unabhängig voneinander für Alkyl oder Aryl stehen und R⁴ für eine Alkylgruppe mit 1 bis 10 C-Atomen, welche gegebenenfalls 1 oder 2 Ether-Sauerstoffe enthält, insbesondere für eine Alkylgruppe mit 1 bis 4 C-Atomen, steht. Besonders bevorzugt ist der hydrolysierbare Rest X eine Alkoxygruppe -OR⁴.

In einer speziellen Ausführung können zwei Alkoxygruppen -OR⁴ zusammen für eine Alkylendioxy-Gruppe -OR⁵O- stehen, welche mit dem Siliciumatom einen fünf- oder sechsgliedrigen Ring bilden, wobei R⁵ für eine Alkylengruppe mit 2 bis 10, insbesondere 2 oder 3, C-Atomen steht.

Silanbezeichnungen mit funktionellen Gruppen als Präfixen, wie beispielsweise "Aminosilan" oder "Mercaptosilan", bezeichnen Silane, welche die genannte funktionelle Gruppe am organischen Rest als Substituenten tragen.

Es hat sich als günstig erwiesen, wenn R³ für Propylen steht.

Weiterhin werden als hydrolysierbaren Rest X die Reste -OMethyl, -OEthyl oder -O-isoPropyl, insbesondere -OMethyl, bevorzugt.

Vorzugsweise ist für a der Wert 0.

Geeignete Mercaptosilane sind beispielsweise Mercaptomethyl-trimethoxysilan, Mercaptomethyl-triethoxysilan, Mercaptomethyl-dimethoxymethylsilan, Mercaptomethyl-diethoxymethylsilan, 3-Mercaptopropyl-trimethoxysilan, 3-Mercaptopropyl-triethoxysilan, 3-Mercaptopropyl-triisopropoxysilan, 3-Mercaptopropyl-methoxy(1,2-ethylendioxy)-silan, 3-Mercaptopropyl-methoxy(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan, 4-Mercapto-3,3-dimethylbutyl-trimethoxysilan.

Als Mercaptosilane sind 3-Mercaptopropyl-trimethoxysilan und 3-Mercaptopropyl-triethoxysilan, insbesondere 3-Mercaptopropyl-trimethoxysilan, bevorzugt.

Vorzugsweise beträgt die Menge an zugegebenem Mercaptosilan der Formel (I) 3 - 10 Gew.-%, insbesondere 3 - 5 Gew.-%, bezogen auf das Gesamtgewicht des Umsetzungsprodukts **UP**.

Das Aldimin **Z** weist eine Aldiminogruppe sowie mindestens eine weitere Reaktivgruppe ausgewählt aus der Gruppe bestehend aus Aldiminogruppen, Hydroxylgruppen, Mercaptogruppen und sekundären Aminogruppen auf.

In einer Ausführungsform weist das Aldimin **Z** eine Aldiminogruppe sowie mindestens eine weitere Aldiminogruppen, auf. Vorzugsweise ist das Aldimin **Z** frei von Hydroxylgruppen, Mercaptogruppen und sekundären Aminogruppen. Ein solches Aldimin **Z** reagiert erst bei Kontakt mit Wasser mit in der Zusammensetzung vorhandenen Isocyanatgruppen.

In einer weiteren Ausführungsform weist das Aldimin **Z** eine Aldiminogruppe sowie mindestens eine weitere Reaktivgruppe ausgewählt aus der Gruppe bestehend aus Hydroxylgruppen, Mercaptogruppen und sekundären Aminogruppen auf.

Vorzugsweise weist das Aldimin **Z** eine Aldiminogruppe sowie mindestens eine weitere Reaktivgruppe auf, wobei es sich bei der weiteren Reaktivgruppe um Hydroxylgruppen handelt.

Diese Gruppen reagieren mit Isocyanatgruppen zu Urethan- bzw. Thiourethan bzw. Harstoffgruppen. Auf diese Weise werden solche Aldimine **Z** in der Zusammensetzung an vorhandene Polyisocyanate angebunden, wodurch entweder Aldimine **Z** in Form von Di- oder Polyaldiminen oder Aldimine **Z** mit Isocyanatgruppen entstehen.

Aldimine sind Kondensationsprodukte von primären Aminen mit Aldehyden. Durch hydrolytische Aktivierung ist aus jeder Aldiminogruppe eine primäre Aminogruppe freisetzbar.

Zu Herstellung von Aldiminen **Z** geeignete primäre Amine sind in einer Ausführungsform Amine mit mindestens zwei primären Aminogruppen. Diese werden mit Aldehyden umgesetzt, wodurch Aldimine **Z** mit mindestens zwei Aldiminogruppen erhältlich sind.

Zu Herstellung von Aldiminen **Z** geeignete primäre Amine sind in einer weiteren Ausführungsform Amine mit mindestens einer primären Aminogruppe und mit zusätzlich mindestens einer Hydroxylgruppe oder Mercaptogruppe oder sekundären Aminogruppe.

Das Aldimin **Z** basiert bevorzugt auf einem Amin ausgewählt aus der Gruppe bestehend aus 1,6-Hexamethylendiamin, 1,5-Diamino-2-methylpentan, 1,3-Pentandiamin, 1-Amino-3-aminomethyl-3,5,5-trimethylcyclohexan (= Isophorondiamin), 2,2,4- und 2,4,4-Trimethylhexamethylendiamin, 1,3-Bis-(aminomethyl)benzol, 1,3-Bis-(aminomethyl)cyclohexan, 1,4-Bis-(aminomethyl)cyclohexan, Bis-(4-aminocyclohexyl)methan, Bis-(4-amino-3-methylcyclohexyl)methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine® erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan.

Weiter bevorzugt basiert das Aldimin **Z** basiert auf einem Amin ausgewählt aus der Gruppe bestehend aus 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)propylamin und 3-(6-Hydroxyhexyloxy)-propylamin, N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, N-Cocoalkyl-1,3-propandiamin, N-Oleyl-1,3-propandiamin, N-Soyaalkyl-1,3-propandiamin und N-Talgalkyl-1,3-propandiamin;

Besonders bevorzugt weist das Aldimin **Z** mindestens eine Aldiminogruppe, die nicht durch Tautomerisierung in eine Enaminogruppe überführbar ist, auf. Solche Aldiminogruppen weisen am Kohlenstoffatom in α-Stellung zum Kohlenstoffatom der Aldiminogruppe kein Wasserstoffatom auf. Diese Aldiminogruppen hydrolysieren besonders langsam und sind zusammen mit Isocyanaten unter Ausschluss von Feuchtigkeit besonders lagerstabil. Insbesondere sind sie auch mit aromatischen Isocyanaten sehr lagerstabil. Sie sind abgeleitet von Aldehyden, welche am Kohlenstoffatom in α-Stellung zum Kohlenstoffatom der Aldehydgruppe kein Wasserstoffatom aufweisen.

Insbesondere weist das Aldimin **Z** an der Aldiminogruppe einen Rest ausgewählt aus der Gruppe bestehend aus Phenyl, 2,2-Dimethylpropyl, 2,2-Dimethyl-3-phenylpropyl, 2,2-Dimethyl-3-acetoxy-propyl, 2,2-Dimethyl-3-isobutyroxy-propyl, 2,2-Dimethyl-3-caproyloxy-propyl, 2,2-Dimethyl-3-benzoyloxy-propyl, 2,2-Dimethyl-3-capryloyloxy-propyl, 2,2-Dimethyl-3-caprinoyloxy-propyl, 2,2-Dimethyl-3-lauroyloxy-propyl, 2,2-Dimethyl-3-myristoyloxy-propyl, 2,2-Dimethyl-3-palmitoyloxy-propyl, 2,2-Dimethyl-3-stearoyloxy-propyl, 2,2-Dimethyl-3-dimethylamino-propyl, 2,2-Dimethyl-3-diethylamino-propyl, 2,2-Dimethyl-3-dibutylamino-propyl, 2,2-Dimethyl-3-(N-pyrrolidino)propyl, 2,2-Dimethyl-3-(N-piperidino)propyl, 2,2-Dimethyl-3-(N-morpholino)propyl, 2,2-Dimethyl-3-(N-(2,6-dimethyl)morpholino)propyl, 2,2-Dimethyl-3-(N-(4-methylpiperazino))propyl, 2,2-Dimethyl-3-(N-(4-ethylpiperazino))propyl, 2,2-Dimethyl-3-(N-benzylmethylamino)propyl, 2,2-Dimethyl-3-(N-benzylisopropylamino)propyl, 2,2-Dimethyl-3-(N-methylcyclohexylamino)propyl und 2,2-Dimethyl-3-bis-(2-methoxyethyl)-amino-propyl, auf. Aldimine **Z** mit solchen Aldiminogruppen sind gut zugänglich und sehr gut verträglich in Polyurethansystemen.

Davon besonders bevorzugt sind 2,2-Dimethyl-3-caproyloxy-propyl, 2,2-Dimethyl-3-benzoyloxy-propyl, 2,2-Dimethyl-3-capryloyloxy-propyl, 2,2-Dimethyl-3-caprinoyloxy-propyl, 2,2-Dimethyl-3-lauroyloxy-propyl, 2,2-Dimethyl-3-myristoyloxy-propyl, 2,2-Dimethyl-3-palmitoyloxy-propyl, 2,2-Dimethyl-3-stearoyloxy-propyl, 2,2-Dimethyl-3-(N-morpholino)propyl, 2,2-Dimethyl-3-(N-(2,6-dimethyl)morpholino)propyl, 2,2-Dimethyl-3-(N-(4-methylpiperazino))propyl, 2,2-Dimethyl-3-(N-(4-ethylpiperazino))propyl, 2,2-Dimethyl-3-(N-benzylmethylamino)propyl, 2,2-Dimethyl-3-(N-benzylisopropylamino)propyl und 2,2-Dimethyl-3-bis-(2-methoxyethyl)aminopropyl. Insbesondere bevorzugt ist 2,2-Dimethyl-3-lauroyloxy-propyl. Aldimine Z mit solchen Aldiminogruppen sind geruchsarm oder geruchsfrei.

Geruchsarme und geruchsfreie Aldimine **Z** weisen den Vorteil auf, dass bei ihrer Hydrolyse geruchsarme oder geruchsfreie Aldehyde freigesetzt werden, welche auch im freigesetzten Zustand weitgehend in der Zusammensetzung verbleiben, also nicht in die Umgebung diffundieren. Dadurch sind Zusammensetzungen enthaltend solche Aldimine **Z** insbesondere auch für Anwendungen in geschlossenen Räumen geeignet.

Das Aldimin **Z** liegen in der feuchtigkeitshärtenden Heisschmelzklebstoffzusammensetzung nach der Zugabe in Schritt iii) vorteilhaft in einer solchen Menge vor, dass die Summe aus der Anzahl gegenüber Isocyanatgruppen reaktiven Gruppen, insbesondere Aldiminogruppen, Hydroxylgruppen, Mercaptogruppen und Aminogruppen, gegenüber der Anzahl der in der Zusammensetzung vorhandenen Isocyanatgruppen im Bereich von 0.2 - 1.1, insbesondere 0.3 - 0.9, insbesondere bevorzugt 0.4 - 0.8, liegt.

Die Aldiminogruppen des Aldimins **Z** reagieren mit vorhandenen Isocyanatgruppen, sobald sie mit Feuchtigkeit in Kontakt kommen. Das zur Hydrolyse der Aldiminogruppen benötigte Wasser kann dabei von aussen in Form von Feuchtigkeit aus der Umgebung, insbesondere in Form von Luftfeuchtigkeit, in die vermischte, applizierte Zusammensetzung diffundieren.

Die Isocyanatgruppen reagieren mit den hydrolysierenden Aldiminogruppen; dabei wird ein Aldehyd freigesetzt. Überschüssige Isocyanatgruppen der Zusammensetzung reagieren direkt mit vorhandener Feuchtigkeit. Als Resultat dieser Reaktionen härtet die Zusammensetzung zu einem festen Material aus. Dieser Vorgang wird auch als Vernetzung bezeichnet. Freigesetzte Aldehyde können, abhängig von ihrer Flüchtigkeit und den herrschenden Umgebungsbedingungen, aus der aushärtenden oder ausgehärteten Zusammensetzung herausdiffundieren, oder sie verbleiben in der ausgehärteten Zusammensetzung.

Vorzugsweise beträgt die Menge an zugegebenem Aldimin **Z** 0.5 - 5 Gew.-%, insbesondere 0.8 - 3 Gew.-%, bevorzugt 1 - 2 Gew.-%, bezogen auf das Gesamtgewicht des Umsetzungsprodukts **UP**.

Beträgt die Menge an zugegebenem Aldimin **Z** 7 -9 Gew.-%, bezogen auf das Gesamtgewicht des Umsetzungsprodukts **UP**, ist dies dahingehend von Vorteil, dass dadurch der Gehalt an nicht umgesetzten Polyisocyanaten besonders stark verringert wird.

Handelt es sich bei dem zugegebenem Aldimin **Z** um ein Aldimin **Z**, welches eine Aldiminogruppe sowie mindestens eine weitere Reaktivgruppe ausgewählt aus der Gruppe bestehend aus Hydroxylgruppen, Mercaptogruppen und sekundären Aminogruppen aufweist, insbesondere Hydroxylgruppen, aufweist, so beträgt die Menge an zugegebenem Aldimin **Z** bevorzugt 1-3 Gew.-%, insbesondere bevorzugt 1-2 Gew.-%, bezogen auf das Gesamtgewicht des Umsetzungsprodukts **UP**. Dies führt zu einer besonders vorteilhaften Viskositätsstabilisierung bei erhöhter Temperatur, insbesondere bei einer Temperatur zwischen 120 °C und 160°C.

Handelt es sich bei dem zugegebenem Aldimin **Z** um ein Aldimin **Z**, welches eine Aldiminogruppe sowie mindestens eine weitere Aldiminogruppen, aufweist, insbesondere ist das Aldimin **Z** frei von Hydroxylgruppen, Mercaptogruppen und sekundären Aminogruppen, so beträgt die Menge an zugegebenem Aldimin **Z** bevorzugt 1-5 Gew.-%, insbesondere bevorzugt 1-2 Gew.-%, bezogen auf das Gesamtgewicht des Umsetzungsprodukts **UP**. Dies führt zu einer besonders vorteilhaften Viskositätsstabilisierung bei erhöhter Temperatur, insbesondere bei einer Temperatur zwischen 120 °C und 160°C.

Vorzugsweise weist die feuchtigkeitshärtende Heisschmelzklebstoffzusammensetzung nach den erfolgten Schritten ii) und iii) einen Gehalt an nicht mit einem Polyol **PO**, nicht mit einem Mercaptosilan der Formel (I) und nicht mit einem Aldimin **Z** reagierten Polyisocyanat **PI** von 1.5 - 0 Gew.-%, vorzugsweise 1 - 0.1 Gew.-%, bezogen auf das Gesamtgewicht der feuchtigkeitshärtenden Heisschmelzklebstoffzusammensetzung, auf.

Weiterhin umfasst die Erfindung ein Verfahren zur Verklebung von Substrat **S1** mit Substrat **S2**.

Dieses Verfahren umfasst die Schritte
i') Aufheizen einer feuchtigkeitshärtenden Heissschmelzklebstoffzusammensetzung, wie sie vorgängig beschrieben wurde, auf eine Temperatur zwischen 85°C und 200°C, insbesondere zwischen 120°C und 160°C;
ii') Applikation der aufgeheizten feuchtigkeitshärtenden Heissschmelzklebstoffzusammensetzung auf ein Substrat **S1;**
iii') Kontaktieren der applizierten feuchtigkeitshärtende Heissschmelzklebstoffzusammensetzung mit einem zweiten Substrat **S2;**
wobei das zweite Substrat **S2** aus demselben oder unterschiedlichem Material wie das Substrat **S1** besteht.

Anschliessend an den Schritt iii) schliesst sich typischerweise ein Schritt iv') des chemischen Aushärtens der feuchtigkeitshärtenden Heissschmelzklebstoffzusammensetzung mit Luftfeuchtigkeit an. Der Fachmann versteht, dass je nach verwendetem System, Temperatur und Reaktivität des Klebstoffs Vernetzungsreaktionen, und damit das chemische Aushärten, bereits während der Applikation beginnen kann. Der Hauptteil der Vernetzung und damit im engeren Sinn des Terms des chemischen Aushärtens findet jedoch nach der Applikation statt.

Die Substrate **S1** und **S2** können eine Vielzahl von Materialien darstellen. Insbesondere eignen sich Kunststoffe, organische Materialien wie Leder, Stoffe, Papier, Holz, mit Harz gebundene Holzwerkstoffe, Harz-Texil-Compositewerkstoffe, Glas, Porzellan, Keramik sowie Metalle und Metall-Legierungen, insbesondere lackierte oder pulverbeschichtete Metalle und Metall-Legierungen.

In einem weiteren Aspekt umfasst die Erfindung einen aus dem Verklebungsverfahren resultierten Artikel. Derartige Artikel sind einerseits insbesondere Artikel der Transportmittel-, Möbel- oder Textilbranche. Als Transportmittelbranche wird insbesondere die Automobilbranche bevorzugt.

### Beispiele

### a) Beschreibung der Prüfmethoden

Der totale Gehalt an Aldimingruppen und freien Aminogruppen in den hergestellten Verbindungen ("Amin-Gehalt") wurde titrimetrisch bestimmt (mit 0.1N HClO₄ in Eisessig, gegen Kristallviolett) und ist stets angegeben in mmol NH₂/g (auch wenn es sich nicht nur um primäre Aminogruppen handelt).

Der Gehalt an nicht mit einem Polyol **PO** reagierten Polyisocyanaten (respektive nicht mit einem Polyol **PO**, nicht mit einem Mercaptosilan der Formel (I) und nicht mit einem Aldimin **Z** reagierten Polyisocyanaten) wurde bestimmt mittels HPLC (Detektion über Photodiodenarray) und ist angegeben in Gewichts-% (Restmonomergehalt) bezogen auf die gesamte Heisschmelzklebstoffzusammensetzung.

Die **Viskosität** bei 130°C wurde folgendermassen bestimmt: Die Zusammensetzungen wurden in ein Luftdicht verschlossenes Gefäss gebracht und innerhalb von 20 min auf eine Temperatur von 140°C erhitzt. Danach wurde von einer Probe der Zusammensetzung unter Ausschluss von Wasser die Viskosität bei einer Temperatur von 130°C mit einem Brookfield Viskosimeter mit Spindel Nr. 27 und 1 Umdrehung pro Minute gemessen. Die Ergebnisse dieser Messungen sind in Tabelle 1 ersichtlich.

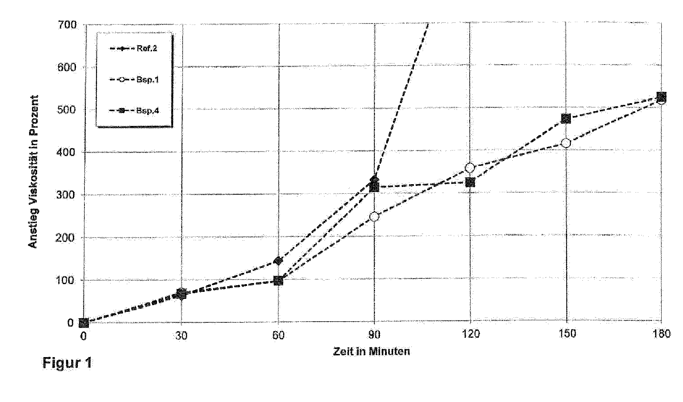

Die **Verarbeitungsstabilität** wurde folgendermassen bestimmt: Die Zusammensetzungen wurden innerhalb von 20 min auf eine Temperatur von 140°C erhitzt, auf eine Walzenbeschichtunganlage (Thermcoat, ICO System, Deutschland) aufgebracht und konstant bei 145°C belassen. Im Abstand von 30 min wurden 3 Stunden lang Proben genommen. Von diesen Proben wurde die Viskosität bei einer Temperatur von 140°C mit einem Brookfield Viskosimeter mit Spindel Nr. 27 und 1 Umdrehung pro Minute gemessen. Die Ergebnisse dieser Messungen sind in Figur 1 ersichtlich.

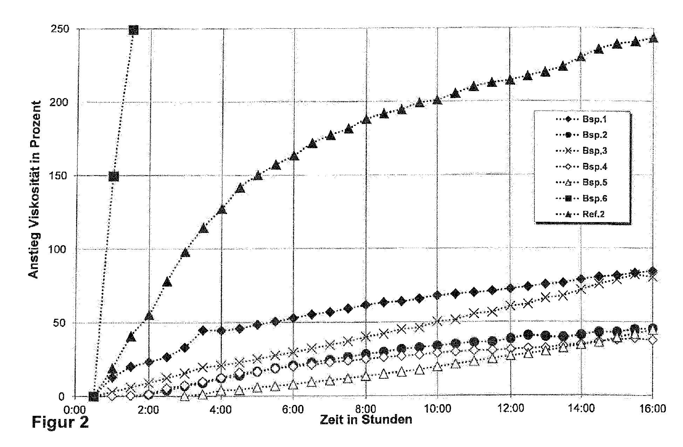

Die **Viskositätsstabilität** wurde folgendermassen bestimmt: Die Zusammensetzungen wurden in ein Luftdicht verschlossenes Gefäss gebracht und innerhalb von 20 min auf eine Temperatur von 140°C erhitzt. Danach wurde die Temperatur konstant bei 140°C belassen und im Abstand von 30 min wurden 16 Stunden lang Proben genommen. Von diesen Proben wurde unter Ausschluss von Wasser die Viskosität bei einer Temperatur von 140°C mit einem Brookfield Viskosimeter mit Spindel Nr. 27 und 1 Umdrehung pro Minute gemessen. Die Ergebnisse dieser Messungen sind in Figur 2 ersichtlich.

### b) Herstellung von Aldiminen Z

### Aldimin 2 (Ald-2)

In einem Rundkolben wurden unter Stickstoffatmosphäre 28.06 g (0.099 mol) 2,2-Dimethyl-3-lauroyloxy-propanal vorgelegt. Unter kräftigem Rühren wurden aus einem Eintropftrichter innerhalb von 3 Minuten 10.00 g (0.095 mol) 2-(2-Aminoethoxy)-ethanol (Diglycolamine^{®} Agent; Huntsman) zugegeben, wobei die Temperatur des Reaktionsgemisches auf 40 °C anstieg. Danach wurden die flüchtigen Bestandteile im Vakuum entfernt (10 mbar, 80 °C). Man erhielt 36.3 g einer farblosen, bei Raumtemperatur dünnflüssigen, klaren und geruchlosen Flüssigkeit, die einen Amin-Gehalt von 2.58 mmol NH₂/g aufwies.

### Aldimin 1 (Ald-1)

In ähnlicher Art und Weise wurde ein Dialdimin hergestellt durch Umsetzung von Jeffamine^{®} D-230 (=Polyoxypropylen-Diamin von Huntsman mit mittlerem Molekulargewicht ca. 240 g/mol und Aminzahl 465 mg KOH/g) mit 2,2-Dimethyl-3-lauroyloxypropanal.

### c) Herstellun von Umsetzungsprodukt UP

Es wurden die in Tabelle 1 aufgeführten Gewichtsteile der folgenden Polyole **PO** wendet:
**PO1,** flüssiges Polyester-Polyol, OH-Zahl 25 mg - 35 mg KOH/g,
**PO2,** amorphes Polyester-Polyol, OH-Zahl 30 mg - 45 mg KOH/g
**PO3,** kristallines Polyester-Polyol, OH-Zahl 25 mg - 60 mg KOH/g

Die aufgeführten Polyole wurden mit 4,4'-Diphenylmethandiisocyanat **(PU1)** (4,4'-MDI; Desmodur^{®} 44 MC L, Bayer) nach bekanntem Verfahren bei 120 °C umgesetzt. Es wurde eine Reaktionsmischung enthaltend NCO-terminiertes Polyurethanpolymer sowie nicht mit einem Polyol **PO** reagierten Polyisocyanaten erhalten. Das Reaktionsprodukt hatte einen mittels HPLC bestimmten Gehalt an nicht mit einem Polyol **PO** reagierten Polyisocyanaten von 3.86 Gewichts-% und war bei Raumtemperatur fest.

### d) Herstellung von Heissschmelzklebstoff-Zusammensetzungen

### Ref.1 (Vergleichsbeispiel)

Das vorgehend beschriebene Umsetzungsprodukt UP wurde unverändert eingesetzt. Die Zusammensetzung wurde bei Raumtemperatur unter Ausschluss von Feuchtigkeit aufbewahrt.

### Ref.2 (Vergleichsbeispiel)

Das vorgehend beschriebene Umsetzungsprodukt **UP** und die in Tabelle 1 aufgeführten Gewichtsteile Mercaptosilan (3-Mercaptopropyltrimethoxysilan, Silquest A-189) wurden bei einer Temperatur von 130 °C homogen vermischt und während 1 Stunde bei 130 °C belassen. Die Zusammensetzung wurde bei Raumtemperatur unter Ausschluss von Feuchtigkeit aufbewahrt.

### Bsp.1 - Bsp.6 (Beispiele)

Das vorgehend beschriebene Umsetzungsprodukt **UP** und die in Tabelle 1 aufgeführten Gewichtsteile Mercaptosilan (3-Mercaptopropyltrimethoxysilan, Silquest A-189) wurden bei einer Temperatur von 130 °C homogen vermischt und während 60 Minuten bei 130 °C belassen.

Danach wurden die in Tabelle 1 aufgeführten Gewichtsteile **Ald-1,** respektive **Ald-2,** wurden bei einer Temperatur von 130 °C homogen vermischt und während 1 Stunde bei 130 °C belassen. Das gebildete Reaktionsprodukt wurde bei Raumtemperatur unter Ausschluss von Feuchtigkeit aufbewahrt.

**Tabelle 1: Eigenschaften der Vergleichsbeispiele 1 und 2 sowie der Beispiele 1 bis 6, n.g. = nicht gemessen, n.m. = nicht messbar.**

| | **Ref. 1** | **Ref. 2** | **Bsp.1** | **Bsp.2** |
|---|---|---|---|---|
| **PO1** | 4.49 | 4.49 | 4.49 | 4.43 |
| **PO2** | 33.19 | 33.19 | 33.19 | 32.81 |
| **PO3** | 34.86 | 34.86 | 34.86 | 44.33 |
| **PI1** | 13.33 | 13.33 | 13.33 | 13.17 |
| Silquest A-189 | | 3 | 3 | 3 |
| **AId-1** | | | 1 | 2 |
| **AId-2** | | | | |
| Viskosität 130°C [N/mm²] | 35'000 | 25'000 | 79'300 | 75'100 |
| Restmonomergehalt [%] | 3.86 | 1.1 | 1.02 | 0.71 |
| | | | | |

| | **Bsp.3** | **Bsp.4** | **Bsp.5** | **Bsp.6** |
|---|---|---|---|---|
| **PO1** | 4.3 | 4.49 | 4.44 | 4.3 |
| **PO2** | 31.82 | 33.19 | 32.84 | 31.85 |
| **PO3** | 43 | 34.86 | 44.37 | 43 |
| **PI1** | 12.78 | 13.33 | 13.19 | 12.79 |
| Silquest A-189 | 3 | 3 | 3 | 3 |
| **AId-1** | 5 | | | |
| **AId-2** | | 1 | 2 | 5 |
| Viskosität 130°C [N/mm²] | 149'000 | 180'000 | 178'000 | n.m. |
| Restmonomergehalt [%] | 0.78 | 0.59 | n.g. | n.g. |

### Verarbeitungsstabilität bei 145°C

In Bezug auf Figur 1 wurde überraschenderweise festgestellt, dass die nach dem erfindungsgemässen Verfahren hergestellten Heisschmelzklebstoffzusammensetzungen bei erhöhter Temperatur über eine bedeutend bessere Verarbeitungsstabilität verfügt, als eine Heisschmelzklebstoffzusammensetzung, bei deren Umsetzungsprodukt **UP** einzig Mercaptosilan zugegeben wurde (Ref.2).

Das Phänomen, dass die Erhöhung der Viskosität mit dem Kontakt mit der Luftfeuchtigkeit durch Applikation der Zusammensetzung bei hoher Temperatur, welche insbesondere der Applikationstemperatur entspricht, d.h. typischerweise zwischen 120 °C und 160°C, über eine Zeit von 180 Minuten nur sehr viel schwächer beziehungsweise langsamer ansteigt, wird in diesem Dokument mit dem Begriff "Verarbeitungsstabilität" bezeichnet.

### Viskositätsstabilität bei 140°C

In Bezug auf Figur 2 wurde überraschenderweise festgestellt, dass die nach dem erfindungsgemässen Verfahren hergestellten Heisschmelzklebstoffzusammensetzungen bei erhöhter Temperatur über eine bedeutend bessere Viskositätsstabilität verfügt, als eine Heisschmelzklebstoffzusammensetzung, bei deren Umsetzungsprodukt **UP** einzig Mercaptosilan zugegeben wurde (Ref.2). Einzig Bsp.6 zeigt eine geringere Viskositätsstabilität als Ref.2.

Das Phänomen, dass die Erhöhung der Viskosität mit der Lagerzeit bei hoher Temperatur, welche insbesondere der Applikationstemperatur entspricht, d.h. typischerweise bei einer Lagertemperatur zwischen 120 °C und 160°C, nur sehr viel schwächer beziehungsweise langsamer ansteigt, wird in diesem Dokument mit dem Begriff "Viskositätsstabilität" bezeichnet.

## Patentansprüche

1. Verfahren zur Herstellung einer feuchtigkeitshärtenden Heisschmelzklebstoffzusammensetzung aufweisend die Schritte:
Schritt i) Herstellen eines Umsetzungsprodukts **UP** von mindestens einem Polyol **PO** mit mindestens einem Polyisocyanat **PI**;
Schritt ii) Zugabe von mindestens einem Mercaptosilan der Formel (I)
HS―R³―Si(X)₍₃₋ₐ₎(R²)ₐ (I)
wobei R² für eine Alkylgruppe mit 1 bis 10 C-Atomen steht,
R³ für eine lineare oder verzweigte Alkylengruppe mit 1 bis 10 C-Atomen steht,
X für einen hydrolysierbaren Rest steht,
a für einen Wert von 0, 1 oder 2 steht;
Schritt iii) Zugabe von mindestens einem Aldimin **Z**, welches eine Aldiminogruppe sowie mindestens eine weitere Reaktivgruppe ausgewählt aus der Gruppe bestehend aus Aldiminogruppen, Hydroxylgruppen, Mercaptogruppen und sekundären Aminogruppen aufweist.

2. Verfahren gemäss Anspruch 1, **dadurch gekennzeichnet, dass** das Umsetzungsprodukts UP in Schritt i) einen Gehalt an nicht mit einem Polyol **PO** reagierten Polyisocyanat **PI** von 5 - 0.1 Gew.-%, insbesondere 4 - 1 Gew.-%, bezogen auf das Gesamtgewicht des Umsetzungsprodukts **UP**, aufweist.

3. Verfahren gemäss einem der vorhergehenden Ansprüche, **dadurch gekennzeichnet, dass** die feuchtigkeitshärtende Heisschmelzklebstoffzusammensetzung nach den erfolgten Schritten ii) und iii) einen Gehalt an nicht mit einem Polyol **PO**, nicht mit einem Mercaptosilan der Formel (I) und nicht mit einem Aldimin **Z** reagierten Polyisocyanat **PI** von 1.5 - 0 Gew.-%, vorzugsweise 1 - 0.1 Gew.-%, bezogen auf das Gesamtgewicht der feuchtigkeitshärtenden Heisschmelzklebstoffzusammensetzung, aufweist.

4. Verfahren gemäss einem der vorhergehenden Ansprüche, **dadurch gekennzeichnet, dass** die Menge an zugegebenem Aldimin **Z** 0.5 - 5 Gew.-%, insbesondere 0.8 - 3 Gew.-%, bevorzugt 1 - 2 Gew.-%, bezogen auf das Gesamtgewicht des Umsetzungsprodukts **UP**, beträgt.

5. Verfahren gemäss einem der vorhergehenden Ansprüche, **dadurch gekennzeichnet, dass** die Menge an zugegebenem Mercaptosilan der Formel (I) 3-10 Gew.-%, insbesondere 3-5 Gew.-%, bezogen auf das Gesamtgewicht des Umsetzungsprodukts **UP**, beträgt.

6. Verfahren gemäss einem der vorhergehenden Ansprüche, **dadurch gekennzeichnet, dass** R³ für Propylen steht.

7. Verfahren gemäss einem der vorhergehenden Ansprüche, **dadurch gekennzeichnet, dass** X für OR⁴ steht, wobei R⁴ für eine Alkylgruppe mit 1 bis 10 C-Atomen, welche gegebenenfalls 1 oder 2 Ether-Sauerstoffe enthält, insbesondere für eine Alkylgruppe mit 1 bis 4 C-Atomen, steht.

8. Verfahren gemäss einem der vorhergehenden Ansprüche, **dadurch gekennzeichnet, dass** das Aldimin **Z** mindestens eine Aldiminogruppe, die nicht durch Tautomerisierung in eine Enaminogruppe überführbar ist, aufweist.

9. Verfahren gemäss Anspruch 8, **dadurch gekennzeichnet, dass** das Aldimin **Z** an der Aldiminogruppe einen Rest ausgewählt aus der Gruppe bestehend aus 2,2-Dimethyl-3-caproyloxy-propyl, 2,2-Dimethyl-3-benzoyloxy-propyl, 2,2-Dimethyl-3-capryloyloxy-propyl, 2,2-Dimethyl-3-caprinoyloxy-propyl, 2,2-Dimethyl-3-lauroyloxy-propyl, 2,2-Dimethyl-3-myristoyloxy-propyl, 2,2-Dimethyl-3-palmitoyloxy-propyl, 2,2-Dimethyl-3-stearoyloxy-propyl, 2,2-Dimethyl-3-(N-morpholino)propyl, 2,2-Dimethyl-3-(N-(2,6-dimethyl)morpholino)propyl, 2,2-Dimethyl-3-(N-(4-methylpiperazino))propyl, 2,2-Dimethyl-3-(N-(4-ethylpiperazino))propyl, 2,2-Dimethyl-3-(N-benzylmethylamino)propyl, 2,2-Dimethyl-3-(N-benzylisopropylamino)propyl und 2,2-Dimethyl-3-bis-(2-methoxyethyl)amino-propyl, auf.

10. Verfahren gemäss einem der vorhergehenden Ansprüche, **dadurch gekennzeichnet, dass** das Aldimin **Z** eine Aldiminogruppe sowie mindestens eine weitere Aldiminogruppen, aufweist, insbesondere ist das Aldimin **Z** frei von Hydroxylgruppen, Mercaptogruppen und sekundären Aminogruppen.

11. Verfahren gemäss einem der Ansprüche 1 - 9, **dadurch gekennzeichnet, dass** das Aldimin **Z** eine Aldiminogruppe sowie mindestens eine weitere Reaktivgruppe ausgewählt aus der Gruppe bestehend aus Hydroxylgruppen, Mercaptogruppen und sekundären Aminogruppen aufweist, insbesondere Hydroxylgruppen, aufweist.

12. Verfahren gemäss einem der vorhergehenden Ansprüche, **dadurch gekennzeichnet, dass** das Umsetzungsprodukts **UP** aus Schritt i) mehr als 90 Gew.-%, insbesondere mehr als 95 Gew.-%, eines Polyurethanpolymers **P** aufweist, bezogen auf das Gesamtgewicht des Umsetzungsprodukts **UP**, wobei das Polyurethanpolymer **P** über eine Reaktion von mindestens einem Polyisocyanat **PI** und mindestens einem Polyol **PO** hergestellt ist.

13. Feuchtigkeitshärtende Heisschmelzklebstoffzusammensetzung hergestellt nach einem Verfahren gemäss einem der vorgehenden Ansprüche.

14. Verfahren zur Verklebung von Substrat **S1** mit Substrat **S2** umfassend die Schritte
i') Aufheizen einer feuchtigkeitshärtenden Heissschmelzklebstoffzusammensetzung hergestellt nach einem Verfahren gemäss einem der Ansprüche 1 bis 12 auf eine Temperatur zwischen 85°C und 200°C, insbesondere zwischen 120°C und 160°C;
ii') Applikation der aufgeheizten feuchtigkeitshärtenden Heissschmelzklebstoffzusammensetzung auf ein Substrat **S1**;
iii') Kontaktieren der applizierten feuchtigkeitshärtende Heissschmelzklebstoffzusammensetzung mit einem zweiten Substrat **S2**;
wobei das zweite Substrat **S2** aus demselben oder unterschiedlichem Material wie das Substrat **S1** besteht.

15. Artikel, welcher nach einem Verklebungsverfahren gemäss Anspruch 14 verklebt wurde.
